# EUROPEAN PATENT SPECIFICATION

(11) **EP 2 131 525 B1**
(45) Date of publication and mention of the grant of the patent: **26.12.2012**
(21) Application number: 08773169.1
(22) Date of filing: 11.07.2008
(51) Int. Cl.: H04W 12/06, H04L 9/32, H04L 12/28, H04W 4/00, H04L 9/00, H04L 29/06

(54) **Method and system for CNG and CNGCF authentication management in a NASS**
Verfahren und System zur CNG und CNGCF Authentifizierungsverwaltung in NASS
Procédé et systéme pour la gestion d'authentification de la CNG et da la CNGCF dans un NASS

(30) Priority: 11.07.2007 CN 200710129583
(43) Date of publication of application: 09.12.2009
(73) Proprietor: Huawei Technologies Co., Ltd., Longgang District, Shenzhen Guangdong 518129 (CN)
(72) Inventor: GONG, Xiaoyu c/o Huawei Technologies Co.Ltd., Longgang District 518129, Shenzhen (CN); LI, Hongguang c/o Huawei Technologies Co.Ltd., Longgang district 518129, Shenzhen (CN)
(74) Representative: Kreuz, Georg Maria
(86) International application number: PCT/CN2008/071617
(87) International publication number: WO 2009/006854

(56) References cited:
- CN-A- 1 239 362
- CN-A- 1 856 155
- CN-A- 1 859 722
- CN-A- 1 863 111
- CN-A- 1 956 377
- US-A- 5 485 520
- "Telecommunications and Internet converged Services and Protocols for Advanced Networking (TISPAN); NGN Functional Architecture; Network Attachment Sub-System (NASS); RES/TISPAN-02045-NGN-R2", ETSI STANDARDS, LIS, SOPHIA ANTIPOLIS CEDEX, FRANCE, no. V0.4.0, 1 July 2007 (2007-07-01), XP014039445, ISSN: 0000-0001
- ARAZI B.: 'Vehicular Implementations of Public Key Cryptography Techniques' IEEE TRANS. VEHICULAR TECHNOLOGY vol. 40, no. 3, August 1991, pages 646 - 653, XP000266039

## Description

### Field of the Invention

The present invention relates to the telecommunications field, and in particular, to method and system for management authentication based on NASS.

### Background of the Invention

Customer Network Gateways (CNGs) are characterized by large quantities and wide distribution. To meet the requirement for CNG Configuration Function (CNGCF) authentication, a unique credential needs to be generated for each CNG. However, the generation, reliable distribution (to the CNG and CNGCF), and update of the huge quantity of credentials (shared keys and digital certificates) are difficulties imposed to the operators.

In the prior art, the unidirectional or bidirectional authentication solution between the CNG and the CNGCF is: A shared credential (such as username or shared key) is deployed statically on the CNG and the CNGCF. Specifically, in the service deployment stage, the operation and maintenance engineers of the telecom operators generate an credential (such as username and shared key) for each CNG; and the credential is configured onto the CNG and the CNGCF, and the CNGCF is correlated with the CNG identifier; the CNG and the CNGCF perform bidirectional or unidirectional authentication according to the credential during the interoperation; the shared authentication mode configured statically in the prior art generates a unique shared key for each of the numerous CNGs, and such unique shared keys need to be configured to the CNG and the CNGCF manually, thus involving complicated work and high costs.

### Summary of the Invention

The present invention provides a method and system for management authentication based on NASS to implement simple and cost-efficient authentication of the CNG and CNGCF, to reduce the operation cost and to improve the operation efficiency.

As a first aspect of the invention the method for management authentication based on NASS generally includes:
performing, by a user access authorization module, access authentication for a CNG;
generating, by the user access authorization module, an management credential between the CNG and a CNGCF;
sending, by the user access authorization module, the generated management credential to the CNGCF so that the CNG obtains the management credential;
authenticating, by the CNG, the CNGCF according to the obtained management credential; and, authenticating, by the CNGCF, the CNG according to the management credential.

As a second aspect of the invention the system for management authentication based on NASS generally includes:
a user access authorization module, configured to perform access authentication for a CNG, generate an management credential between the CNG and a CNGCF, and send the management credential;
the CNG, configured to obtain the management credential, and authenticate the corresponding CNGCF according to the credential; and
the CNGCF, configured to receive the management credential, and authenticate the corresponding CNG according to the management credential.

The method and system for management authentication based on NASS provided herein generate, distribute and modify credentials automatically, thus reducing the operation and maintenance costs of distributing numerous CNGs, and improving the operation efficiency massively.

### Brief Description of the Drawings

FIG. 1 shows a first schematic diagram of an architecture of a method for management authentication based on NASS according to an embodiment of the present invention;
FIG. 2 shows a first flowchart of a method for management authentication based on NASS according to an embodiment of the present invention;
FIG. 3 shows a second schematic diagram of an architecture of a method for management authentication based on NASS according to an embodiment of the present invention;
FIG. 4 shows a second flowchart of a method for management authentication based on NASS according to an embodiment of the present invention;
FIG. 5 shows a first schematic diagram of a structure of a system for management authentication based on NASS according to an embodiment of the present invention;
FIG. 6 shows a second schematic diagram of a structure of system for management authentication based on NASS according to an embodiment of the present invention;
FIG. 7 shows a third schematic diagram of a structure of a system for management authentication based on NASS according to an embodiment of the present invention;
FIG. 8 shows a first flowchart of another method for management authentication based on NASS according to an embodiment of the present invention;
FIG. 9 shows a first schematic diagram of a structure of another system for management authentication based on NASS according to an embodiment of the present invention; and
FIG. 10 shows a second schematic diagram of a structure of a method and system for management authentication based on NASS according to an embodiment of the present invention.

### Detailed Description of the Invention

The present invention is hereinafter described in detail with reference to accompanying drawings and exemplary embodiments.

A NASS-based method for authenticating a CNG and a CNGCF in one of the embodiment of the present invention includes the following steps:
Step 1: A user access authorization module performs access authentication for the CNG.
Step 2: The user access authorization module generates a management credential between the CNG and the CNGCF.
Step 3: The user access authorization module sends the generated management credential to the CNGCF and the CNG, and sets up a correlation between the CNG and the management credential.

The user access authorization module may also send only the key algorithm, initial vector and lifecycle information in the management credential to the CNG, and the CNG generates the key according to the key algorithm, initial vector and lifecycle information.

Step 4: The CNG and the CNGCF in the bidirectional interaction use the stored management credential to authenticate each other and judge whether the operation is authorized. That is, the CNG authenticates the CNGCF according to the management credential; and the CNGCF authenticates the CNG according to the management credential.

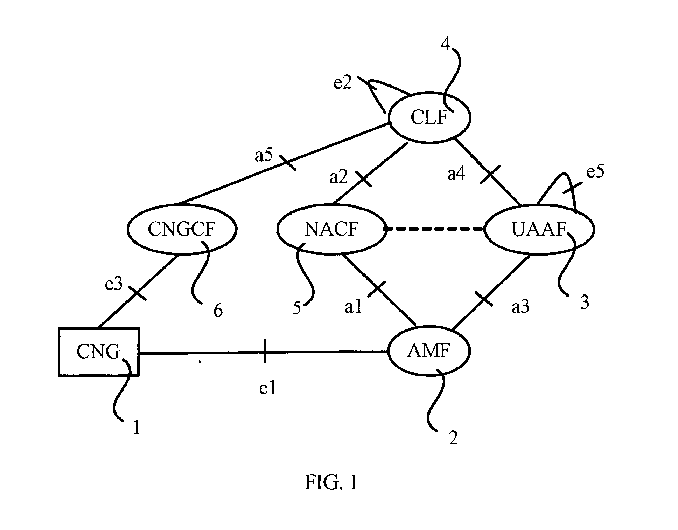

FIG. 1 is the first schematic diagram of an architecture of a method for management authentication based on NASS in an embodiment of the present invention. The NASS includes these functional entities: a Network Access Configuration Function (NACF) capable of network access configuration; a Connectivity Session Location and Repository Function (CLF) capable of connectivity session location; a User Access Authorization Function (UAAF) capable of user access authorization; a CNGCF capable of configuring a User Equipment (UE).

The NASS is adapted to: authenticate a user who attempts to log in based on the subscription profile of the user, authorize the user to use network resources, configure the network according to the authorization information, and allocate IP addresses.

The NASS-based architecture includes: a CNG 1, an Access Management Function (AMF) 2, a UAAF 3, a CLF 4, a NACF 5, and a CNGCF 6. The interface between the NACF 5 and the AMF 2 is a1; the interface between the NACF 5 and the CLF 4 is a2; the interface between the AMF 2 and the UAAF 3 is a3; the interface between the UAAF 3 and the CLF 4 is a4; the interface between the CLF 4 and the CNGCF 6 is a5; the interface between the UE 1 and the AMF 2 is e1; the interface of the CLF 4 itself is e2; the interface between the CNGCF 6 and the UE 1 is e3; and the interface of the UAAF 3 itself is e5.

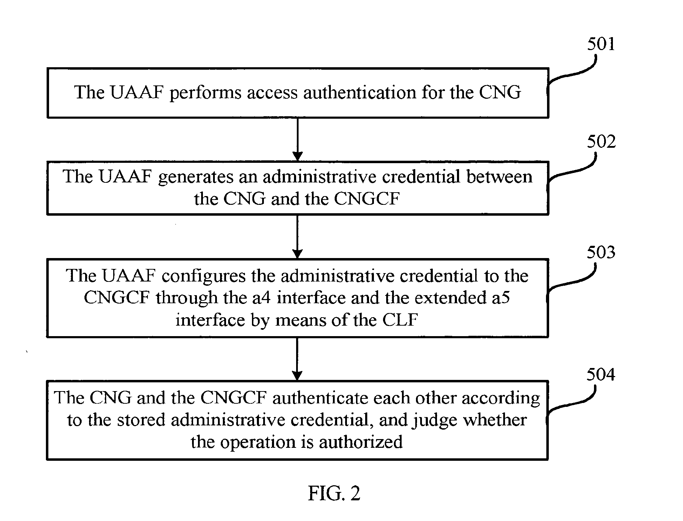

FIG. 2 is the first flowchart of a CNG management authentication method in an embodiment of the present invention. The method includes the following steps: Step 501: The UAAF performs access authentication for the CNG. Specifically, the CNG sends an access authentication request to the UAAF to trigger the security association negotiation between the CNG and the UAAF, with a view to obtaining the security association subsequently. The security association is also known as an management credential.

Step 502: According to the local policy, the UAAF decide whether it is necessary to generate an management credential between the CNG and the CNGCF. If necessary, the UAAF generates an management credential between the CNG and the CNGCF.

The UAAF may use the user access authentication key information or the root key configured by the operator to generate an management credential between the CNG and the CNGCF.

The management credential may include a security protocol, a key algorithm, the key used in the key algorithm, an initial vector, and a lifecycle of the management credential. The management credential is also known as a security association.

Step 503: Through the extended a4 interface and the a5 interface between the CLF and the CNGCF, the UAAF configures the generated management credential to the CNGCF by means of the CLF. The UAAF adds the management credential to an authentication response message and sends the response message to the CNG through the e3 interface connected to the AMF.

The UAAF may also send only the key algorithm, initial vector and lifecycle information in the management credential to the CNG, and the CNG generates the key according to the key algorithm, initial vector and lifecycle information.

Subsequently, when the user attaches to the network, the UAAF uses the key in the management credential generated in the previous login authentication as a root key to generate a new management credential; or still uses the user access authentication key information or other information configured by the operator as a root key, and configures the key to the CNGCF and the CNG in the same way.

Besides, when the user attaches to the network subsequently, according to the policy configured by the operator, the UAAF decides whether a new management credential needs to be generated for every other system access. If it is not necessary the last generated management credential may still be used between the CNG and the CNGCF.

In the actual network deployment, one CLF may correspond to multiple CNGCFs. The CLF may locate the CNGCF in two modes. The first mode is: The CLF sets up a correlation between the CNG and the corresponding CNGCF according to the CNG location information (physical location information or logical location information) pushed by the UAAF for access authentication at the time of user login. Therefore, the CLF needs to configure the mapping between each CNGCF and the physical location or logical location. The other mode is: The CLF sets up the correlation between the CNG and the CNGCF according to the access network identifier allocated by the NACF to the CNG for access authentication at the time of user login, but the prerequisite is that the CLF has configured the mapping relation between each CNGCF and the access network identifier.

Step 504: The CNG and the CNGCF in the bidirectional interaction use the stored management credential to authenticate each other and decide whether the operation is authorized. That is, the CNG authenticates the CNGCF according to the management credential; and the CNGCF authenticates the CNG according to the management credential. If the CNG registers with the CNGCF upon power-on, with a credential being carried in the registration request, the CNGCF compares the received CNG credential with the stored CNG credential. If the CNG credentials are the same, the CNGCF authenticates the CNG successfully and returns an authentication success message. The CNG authenticates the CNGCF in the same way.

The method provided in this embodiment generates, distributes and modifies management credentials automatically, thus enabling authentication between the CNG and the CNGCF fundamentally, reducing the operation and maintenance costs of distributing numerous CNGs, and improving the operation efficiency massively.

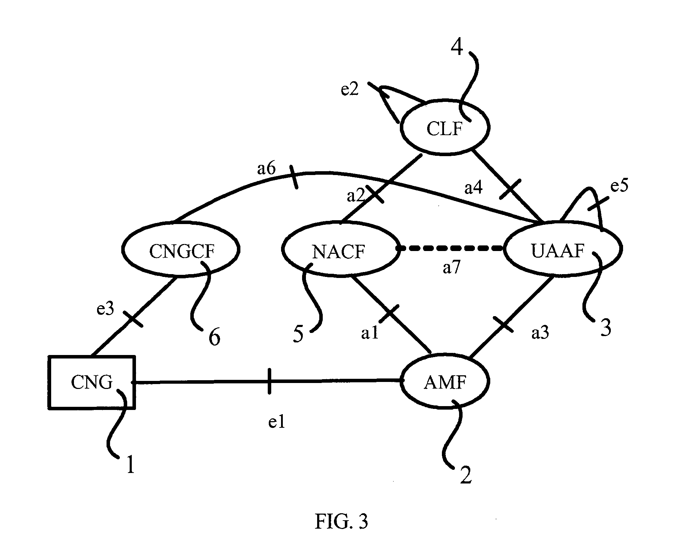

FIG. 3 is the second schematic diagram of an architecture of a CNG management authentication method in an embodiment of the present invention. The authentication method is also based on the NASS architecture, which includes a CNG 1, an AMF 2, a UAAF 3, a CLF 4, a NACF 5, and a CNGCF 6. The interface between the NACF 5 and the AMF 2 is a1; the interface between the NACF 5 and the CLF 4 is a2; the interface between the AMF 2 and the UAAF 3 is a3; the interface between the UAAF 3 and the CLF 4 is a4; the interface between the UAAF 3 and the CNGCF 6 is a6; the interface between the UAAF 3 and the NACF 54 is a7; the interface between the CNG 1 and the AMF 2 is e1; the interface of the CLF 4 itself is e2; the interface between the CNGCF 6 and the CNG 1 is e3; and the interface of the UAAF 3 itself is e5.

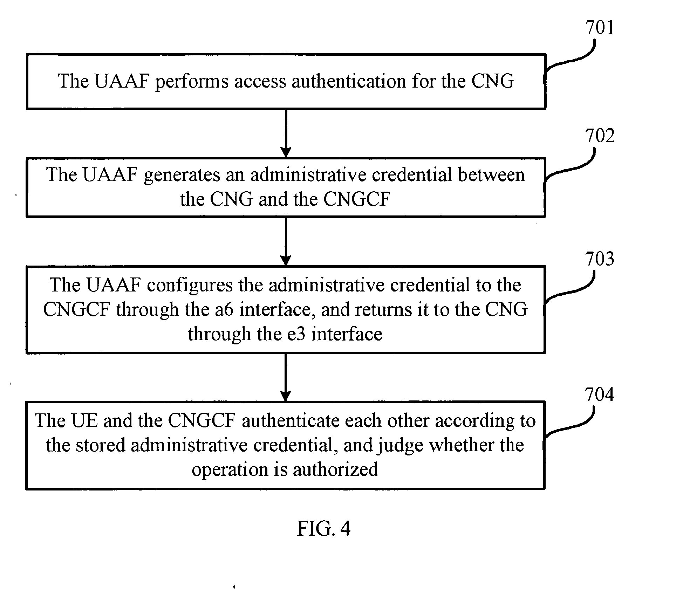

FIG. 4 is the second flowchart of a CNG management authentication method in an embodiment of the present invention. The method includes the following steps:
Step 701: The UAAF performs access authentication for the CNG.
Step 702: According to the local policy, the UAAF decide whether it is necessary to generate a management credential between the CNG and the CNGCF. If necessary, the UAAF generates a management credential between the CNG and the CNGCF.

The UAAF may use the user access authentication key information or the root key configured by the operator to generate a management credential between the CNG and the CNGCF.

The management credential may include a security protocol, a key algorithm, the key used in the key algorithm, an initial vector, and a lifecycle of the management credential. The management credential is also known as a security association.

Step 703: Through the a6 interface between the UAAF and the CNGCF, the UAAF configures the generated management credential to the CNGCF. The UAAF adds the management credential to an authentication response message and sends the response message to the CNG through the e3 interface connected to the AMF.

The UAAF may also send only the key algorithm, initial vector and lifecycle information in the management credential to the CNG, and the CNG generates the key according to the key algorithm, initial vector and lifecycle information.

Subsequently, when the user attaches to the network, the UAAF uses the key in the management credential generated in the previous attachment process as a root key to generate a new management credential; or still uses the user access authentication key information or other information configured by the operator as a root key, and configures the key to the CNGCF and the CNG in the same way.

Besides, when the user attaches to the network subsequently, according to the policy configured by the operator, the UAAF decides whether a new management credential needs to be generated for every other system access. If it is not necessary the last generated management credential may still be used between the CNG and the CNGCF. In the actual network deployment, one UAAF may correspond to multiple CNGCFs. The UAAF may locate the CNGCF in two modes. The first mode is: The UAAF searches for the home CNGCF corresponding to the CNG according to the CNG location information (physical location information or logical location information) that exists when the user logs in and undergoes access authentication. Therefore, the prerequisite is that the UAAF configures the mapping between each CNGCF and the physical location or logical location. The other mode is that the UAAF searches for the CNGCF corresponding to the CNG according to the access network identifier allocated by the NACF to the CNG (through the a7 interface) when the user logs in, or by using the access network identifier allocated by the NACF to the CNG (through the a4 interface) and forwarded by the CLF, but the prerequisite is that the UAAF configures a mapping relation between each CNGCF and the access network identifier.

Step 704: The CNG and the CNGCF in the bidirectional interaction use the stored management credential to authenticate each other and decide whether the operation is authorized. That is, the CNG authenticates the CNGCF according to the management credential; and the CNGCF authenticates the CNG according to the management credential.

The method provided in this embodiment generates, distributes and modifies management credentials automatically, thus enabling authentication between the CNG and the CNGCF fundamentally, reducing the operation and maintenance costs of distributing numerous CNGs, and improving the operation efficiency massively.

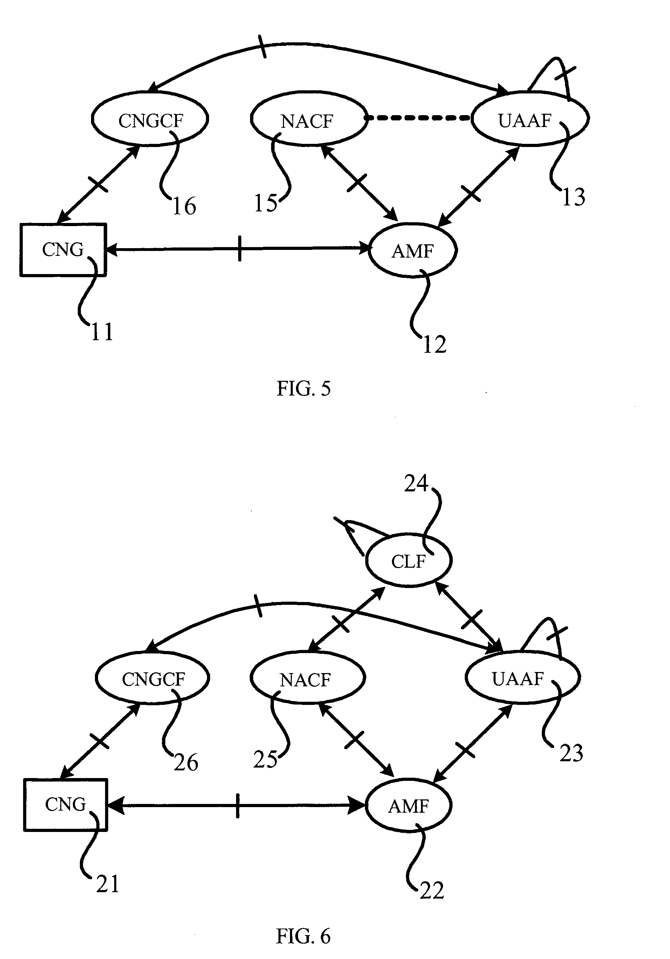

FIG. 5 is the first schematic diagram of a structure of a CNG management authentication system in an embodiment of the present invention. The system includes:
a UAAF 13, adapted to: perform access authentication for a CNG 11, generate an management credential between the CNG 11 and a CNGCF 16, and send the management credential;
the CNG 11, adapted to: receive the management credential, and set up a correlation with the management credential;
the CNGCF 16, adapted to: receive the management credential, whereupon the CNG 11 authenticates the CNGCF 16 according to the management credential and the CNGCF 16 authenticates the CNG 11 according to the management credential;
an AMF 12, adapted to forward the CNG location information to the UAAF 13; and
a NACF 15, adapted to: allocate an access network identifier to the CNG and send the access network identifier to the UAAF 13.

FIG. 6 is the second schematic diagram of a structure of a CNG management authentication system in an embodiment of the present invention. The system includes:
a UAAF 23, adapted to generate an management credential between a CNG 21 and a CNGCF 36;
the CNG 21, adapted to: receive the management credential, and perform management authentication according to the management credential;
the CNGCF 36, adapted to: receive the management credential, and perform management authentication according to the management credential;
an AMF 22, adapted to forward the CNG location information to the UAAF 23; and
a CLF 24, adapted to forward an access network identifier to the UAAF 23, where the access network identifier is allocated by a NACF 25 to the CNG.

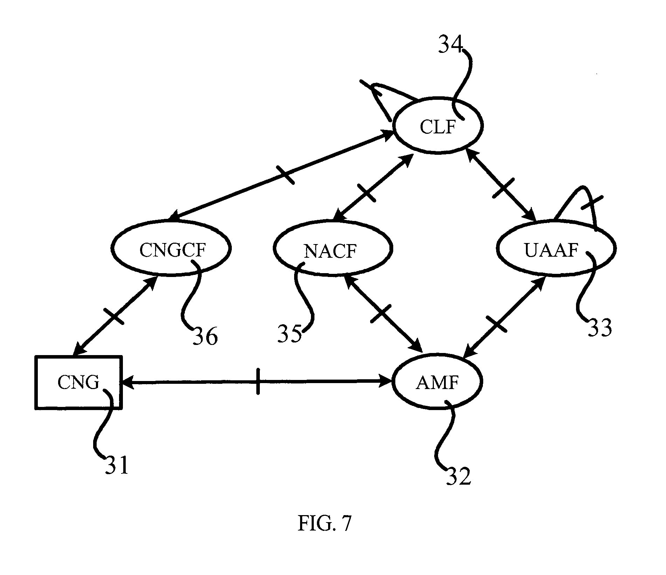

FIG. 7 is the third schematic diagram of a structure of a CNG management authentication system in an embodiment of the present invention. The system includes:
a UAAF 33, adapted to generate an management credential between a CNG 31 and a CNGCF 36;
the CNG 31, adapted to: receive the management credential, and perform management authentication according to the management credential;
the CNGCF 36, adapted to: receive the management credential, and perform authentication according to the credential;
an AMF 32, adapted to forward the CNG location information to the UAAF 33;
a CLF 34, adapted to forward the management credential generated by the UAAF 33 to the CNGCF 36; and
a CLF 34, adapted to forward the management credential generated by the UAAF 33 to the CNGCF 36.
The CNG management authentication system provided in this embodiment generates, distributes and modifies management credentials automatically without manual configuration, thus enabling authentication between the CNG and the CNGCF fundamentally. The system implements automatic control for key distribution, thus providing high security. The system updates the key conveniently, thus reducing the operation and maintenance costs of distributing numerous CNGs, and improving the operation efficiency massively.

Another method for authenticating a CNG and a CNGCF in an embodiment of the present invention includes the following steps:
Step 1: The UAAF performs access authentication for the CNG. The CNG generates a first Pre-Shared Key (PSK), and the access authorization module generates a second PSK.
Step 2: The CNG authenticates the message received from the CNGCF according to the first PSK and the second PSK.
Step 3: The CNGCF authenticates the message received from the CNG according to the first PSK and the second PSK.

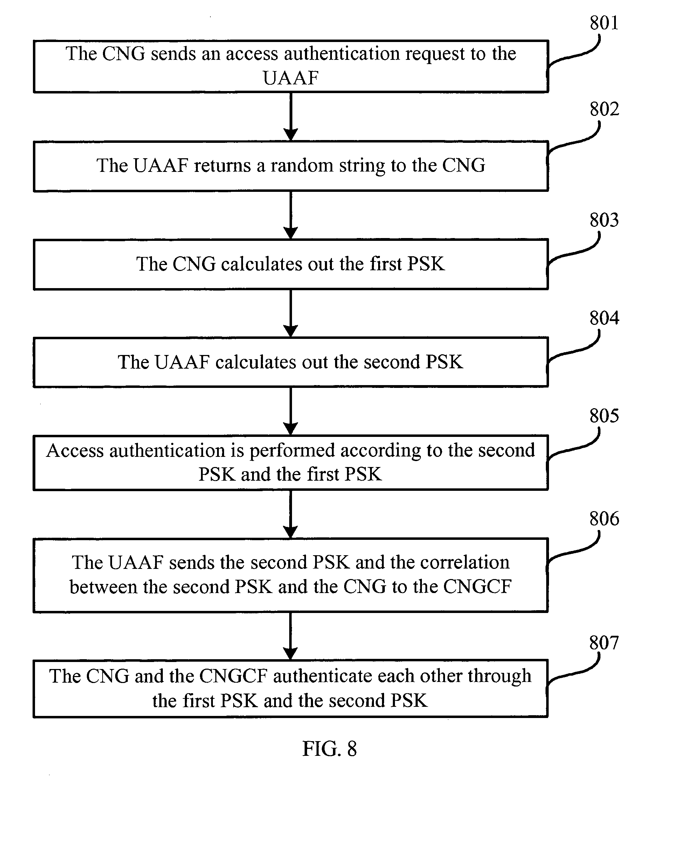

FIG. 8 is the first flowchart of another CNG management authentication method in an embodiment of the present invention. The method includes the following steps:
Step 801: The CNG sends an access authentication request to the UAAF.
Step 802: In the security association stage of the access authentication, many negotiation processes may occur: Challenge (Session ID, random string S, ...).
Step 803: The CNG calculates out the first PSK according to the stored user ID, the original access authentication key, the random string S obtained in the negotiation process, and the authentication session ID, and sends the first PSK to the UAAF.

The calculation method may be the Hash algorithm, namely, the first PSK = HASH (Session ID, random string S, user ID, key).

Step 804: The UAAF calculates out the second PSK according to the stored user ID, the original access authentication key, the random string S obtained in the negotiation process, and the authentication session ID.

The calculation method is the Hash algorithm, namely, the second PSK = HASH (Session ID, random string S, user ID, key).

Step 805: The UAAF performs access authentication according to the second PSK and the first PSK. If the two PSKs are the same, the authentication succeeds; otherwise, the authentication fails.

Step 806: The UAAF sends the second PSK and the correlation between the second PSK and the CNG to the CNGCF.

Step 807: The CNGCF performs authentication according to the first PSK in the message received from the CNG and the second PSK stored in the CNGCF; and the CNG performs authentication according to the second PSK in the message received from the CNGCF and the first PSK stored in the CNG.

The CNG management authentication method in this embodiment shares the same user ID or key with the CNG access authentication, and uses the first PSK and the second PSK generated in the access authentication process, thus simplifying the security association negotiation process of the CNG management authentication, and improving the efficiency while ensuring the security. Therefore, this method reduces the operation and maintenance costs of distributing numerous CNGs and improves the operation efficiency.

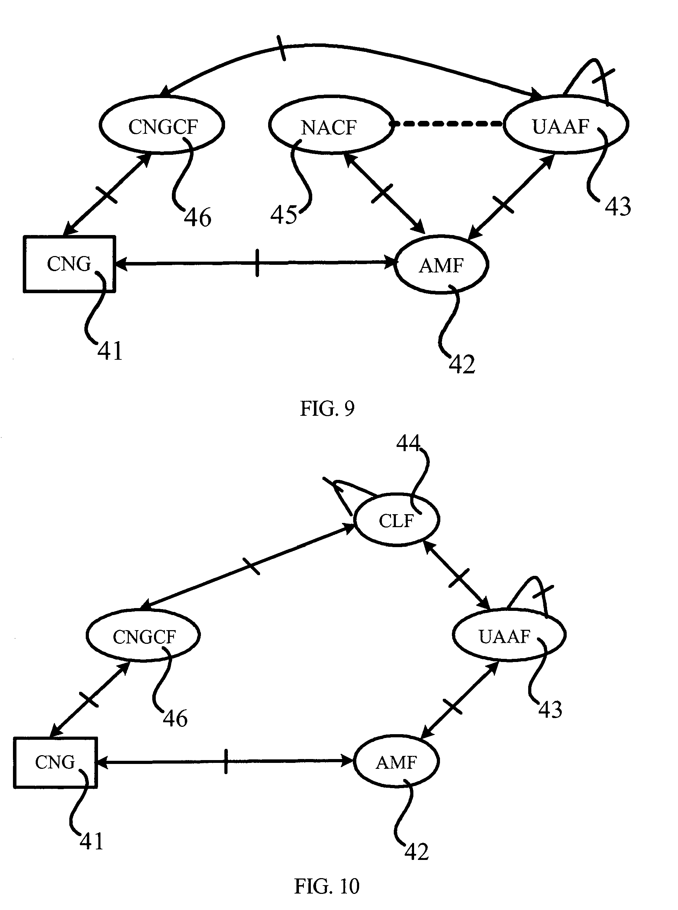

FIG. 9 is the first schematic diagram of a structure of another CNG management authentication system in an embodiment of the present invention. The system includes:
a CNG 41, adapted to: send access authentication information, send and receive management authentication information, and generate a first PSK;
a CNGCF 46, adapted to receive and send the management authentication information;
a UAAF 43, adapted to: receive the access authentication information, generate a second PSK, and send the second PSK to the CNGCF 46, whereupon the CNGCF 46 authenticates the message received from the CNG 41 according to the first PSK and the second PSK and the CNG 41 authenticates the message received from the CNGCF 46 according to the first PSK and the second PSK;
an AMF 42, adapted to forward access authentication information between the CNG 41 and the UAAF 43; and
a NACF 45, adapted to: allocate an access network identifier to the CNG 41 and send it to the UAAF 43, whereupon the UAAF 43 searches for the CNGCF corresponding to the CNG according to the CNG and access network identifier information sent by the NACF and forwards the second PSK to the found CNGCF 46.

The management authentication process involves no AMF.

FIG. 10 is the second schematic diagram of a structure of another CNG management authentication system in an embodiment of the present invention. The system includes:
a CNG 51, adapted to: send access authentication information, send and receive management authentication information, and generate a first PSK;
a CNGCF 56, adapted to receive and send the management authentication information;
a UAAF 53, adapted to: receive the access authentication information, generate a second PSK, and send the second PSK to a CLF 54;
the CLF 54, adapted to forward the second PSK to the CNGCF 56;
the CNGCF 56, adapted to: authenticate the message received from the CNG 51 according to the first PSK and the second PSK, and authenticate the message received from the CNGCF 56 according to the first PSK and the second PSK; and
an AMF 52, adapted to forward access authentication information between the CNG 51 and the UAAF 53.

The CNG management authentication system provided in this embodiment generates, distributes and modifies management credentials automatically, thus enabling authentication between the CNG and the CNGCF fundamentally, reducing the operation and maintenance costs of distributing numerous CNGs, and improving the operation efficiency massively.

Although the invention is described through several exemplary embodiments, the invention is not limited to such embodiments. It is apparent that those skilled in the art can make modifications and variations to the invention without departing from scope of the invention. The invention is intended to cover such modifications and variations provided that they fall in the scope of protection defined by the following claims or their equivalents.

## Claims

1. A method for Customer Network Gateway, CNG, and Customer Network Gateway Configuration Function, CNGCF, authentication management in a Network Attachment Sub-System, NASS, **characterized by**:
performing (501), by a User Access Authorization Function, UAAF, access authentication for a CNG;
generating (502), by the UAAF, a management credential between the CNG and a
CNGCF;
sending, by the UAAF, the generated management credential to the CNGCF; and the CNG obtaining the management credential; and
authenticating (504), by the CNG, the CNGCF according to the obtained management credential; and, authenticating, by the CNGCF, the CNG according to the management credential.

2. The method for management authentication based on NASS of claim 1, wherein the CNG obtaining the management credential comprises:
sending, by the UAAF, the generated management credential to the CNG; and
authenticating, by the CNG, the CNGCF according to the obtained.

3. The method for management authentication based on NASS of claim 1 or claim 2, wherein:
the CNG authenticates the CNGCF according to the obtained management credential; and
the step of the CNGCF authenticating the CNG according to the management credential comprises:
using, by the CNG and the CNGCF, the stored management credential to perform management authentication in a bidirectional interaction.

4. The method for management authentication based on NASS of claim 1, claim 2, or claim 3, wherein generating, by the UAAF, the management credential between the CNG and the CNGCF comprises:
upon initial login of a user, the UAAF judges whether it is necessary to generate the management credential between the CNG and the CNGCF according to a local policy; and, if necessary, the UAAF generates the management credential between the CNG and the CNGCF by using original access authentication key information of the user or a root key configured by an operator.

5. The method for management authentication based on NASS of any of claims 1-4, further comprising:
setting up, by a Connectivity Session Location and Repository Function (CLF) or the UAAF, a correlation between the CNG and the corresponding CNGCF according to CNG location information carried in authentication information when the UAAF performs access authentication for the CNG.

6. The method for management authentication based on NASS of any of claims 1-4, further comprising:
by the CLF or the UAAF, setting up a correlation between the CNG and the corresponding CNGCF according to an access network identifier allocated by a Network Access Configuration Function (NACF) to the CNG when the UAAF performs access authentication for the CNG; or
setting up the correlation between the CNG and the corresponding CNGCF according to the access network identifier allocated by the NACF to the CNG and forwarded by the CLF.

7. The method for management authentication based on NASS of claim 5, wherein sending, by the UAAF, the generated management credential to the CNGCF comprises:
the UAAF searches for the CNGCF corresponding to the CNG through the CLF according to the CNG location information and the correlation between the CNG and the corresponding CNGCF, and sends the generated management credential to the CNGCF.

8. The method for management authentication based on NASS of claim 6, wherein sending, by the UAAF, the generated management credential to the CNGCF comprises:
the CLF searches for the CNGCF corresponding to the CNG according to the access network identifier and the correlation between the CNG and the corresponding CNGCF, and sends the generated management credential to the CNGCF.

9. The method for management authentication based on NASS of claim 2, wherein sending, by the UAAF, the generated management credential to the CNG comprises:
the UAAF sends the generated management credential to the CNG through an Access Management Function (AMF).

10. The method for management authentication based on NASS of any of claims 1-9, wherein:
the management credential is a security association and comprises: a security protocol, a key algorithm, a key used in the key algorithm, an initial vector, and a lifecycle.

11. A system for Customer Network Gateway, CNG, and Customer Network Gateway Configuration Function, CNGCF, authentication management in a Network Attachment Sub-System, NASS, **characterized by**:
a User Access Authorization Function (UAAF) (3), configured to perform access authentication for a CNG (1), generate a management credential between the CNG and a CNGCF (6), and send the management credential;
the CNG (1), configured to obtain the management credential and authenticate the CNGCF according to the management credential; and
the CNGCF (6), configured to obtain the management credential and authenticate the CNG according to the management credential.

12. The system for management authentication based on NASS of claim 11, further comprising:
an Access Management Function (AMF) (2), configured to forward information between the CNG and the UAAF.

13. The system for management authentication based on NASS of claim 11 or claim 12, further comprising:
a Network Access Configuration Function (NACF) (5), configured to allocate an access network identifier to the CNG and send the access network identifier to the UAAF; and
a Connectivity Session Location and Repository Function (CLF) (4), configured to forward the access network identifier to the UAAF, wherein the access network identifier is allocated by the NACF to the CNG.

## Patentansprüche

1. Verfahren zur Authentifizierungsverwaltung des Customer Network Gateway, CNG, und der Customer Network Gateway Configuration Function, CNGCF, in einem Network Attachment Sub-System, NASS, **gekennzeichnet durch** die folgenden Schritte:
eine User Access Authorization Function, UAAF, führt Zugangsauthentifizierung für ein CNG **durch** (501);
die UAAF erzeugt (502) einen Verwaltungsberechtigungsnachweis zwischen dem CNG und einer CNGCF;
die UAAF sendet den erzeugten Verwaltungsberechtigungsnachweis zu der CNGCF;
und das CNG erhält den Verwaltungsberechtigungsnachweis; und
das CNG authentifiziert (504) die CNGCF gemäß dem erhaltenen Verwaltungsberechtigungsnachweis; und die CNGCF authentifiziert das CNG gemäß dem Verwaltungsberechtigungsnachweis.

2. Verfahren zur Verwaltungsauthentifizierung auf der Basis des NASS nach Anspruch 1, wobei das Erhalten des Verwaltungsberechtigungsnachweises durch das CNG Folgendes umfasst:
die UAAF sendet den erzeugten Verwaltungsberechtigungsnachweis zu dem CNG;
und
das CNG authentifiziert die CNGCF gemäß dem Erhaltenen.

3. Verfahren zur Verwaltungsauthentifizierung auf der Basis des NASS nach Anspruch 1 oder Anspruch 2, wobei
das CNG die CNGCF gemäß dem erhaltenen Verwaltungsberechtigungsnachweis authentifiziert; und
der Schritt des Authentifizierens des CNG durch die CNGCF gemäß dem Verwaltungsberechtigungsnachweis Folgendes umfasst:
das CNG und die CNGCF verwenden den gespeicherten Verwaltungsberechtigungsnachweis zum Durchführen der Verwaltungsauthentifizierung in einer bidirektionalen Interaktion.

4. Verfahren zur Verwaltungsauthentifizierung auf der Basis des NASS nach Anspruch 1, Anspruch 2 oder Anspruch 3, wobei das Erzeugen des Verwaltungsberechtigungsnachweises zwischen dem CNG und der CNGCF durch die UAAF Folgendes umfasst:
bei der anfänglichen Anmeldung eines Benutzers beurteilt die UAAF gemäß einer lokalen Richtlinie, ob es notwendig ist, den Verwaltungsberechtigungsnachweis zwischen dem CNG und der CNGCF zu erzeugen; und wenn es notwendig ist,
erzeugt die UAAF den Verwaltungsberechtigungsnachweis zwischen dem CNG und
der CNGCF durch Verwendung von ursprünglichen Zugangsauthentifizierungs-Schlüsselinformationen des Benutzers oder eines durch einen Betreiber konfigurierten Root-Schlüssels.

5. Verfahren zur Verwaltungsauthentifizierung auf der Basis des NASS nach einem der Ansprüche 1-4, ferner mit dem folgenden Schritt:
eine Connectivity Session Location and Repository Function, CLF, oder die UAAF richtet eine Korrelation zwischen dem CNG und der entsprechenden CNGCF gemäß CNG-Ortsinformationen ein, die in Authentifizierungsinformationen geführt werden,
wenn die UAAF Zugangsauthentifizierung für das CNG durchführt.

6. Verfahren zur Verwaltungsauthentifizierung auf der Basis des NASS nach einem der Ansprüche 1-4, ferner mit den folgenden Schritten:
die CLF oder die UAAF richtet eine Korrelation zwischen dem CNG und der entsprechenden CNGCF gemäß einer Zugangsnetzkennung ein, die durch eine Network Access Configuration Function, NACF, an das CNG vergeben wird, wenn die UAAF Zugangsauthentifizierung für das CNG durchführt; oder
die Korrelation zwischen dem CNG und der entsprechenden CNGCF wird gemäß der Zugangsnetzkennung eingerichtet, die durch die NACF an das CNG vergeben und
durch die CLF weitergeleitet wird.

7. Verfahren zur Verwaltungsauthentifizierung auf der Basis des NASS nach Anspruch 5, wobei das Senden des erzeugten Verwaltungsberechtigungsnachweises durch die UAAF zu der CNGCF Folgendes umfasst:
die UAAF sucht nach der dem CNG entsprechenden CNGCF durch die CLF gemäß den CNG-Ortsinformationen und der Korrelation zwischen dem CNG und der entsprechenden CNGCF und sendet den erzeugten Verwaltungsberechtigungsnachweis zu der CNGCF.

8. Verfahren zur Verwaltungsauthentifizierung auf der Basis des NASS nach Anspruch 6, wobei das Senden des erzeugten Verwaltungsberechtigungsnachweises durch die UAAF zu der CNGCF Folgendes umfasst:
die CLF sucht nach der dem CNG entsprechenden CNGCF gemäß der Zugangsnetzkennung und der Korrelation zwischen dem CNG und der entsprechenden CNGCF und sendet den erzeugten Verwaltungsberechtigungsnachweis zu der CNGCF.

9. Verfahren zur Verwaltungsauthentifizierung auf der Basis des NASS nach Anspruch 2, wobei das Senden des erzeugten Verwaltungsberechtigungsnachweises durch die UAAF zu dem CNG Folgendes umfasst:
die UAAF sendet den erzeugten Verwaltungsberechtigungsnachweis durch eine Access Management Function (AMF) zu dem CNG.

10. Verfahren zur Verwaltungsauthentifizierung auf der Basis des NASS nach einem der Ansprüche 1-9, wobei:
der Verwaltungsberechtigungsnachweis eine Sicherheitsassoziation ist und
Folgendes umfasst: ein Sicherheitsprotokoll, einen Schlüsselalgorithmus, einen in dem Schlüsselalgorithmus verwendeten Schlüssel, einen Anfangsvektor und einen Lebenszyklus.

11. System zur Authentifizierungsverwaltung des Customer Network Gateway, CNG, und der Customer Network Gateway Configuration Function, CNGCF, in einem Network Attachment Sub-System, NASS, **gekennzeichnet durch**:
eine User Access Authorization Function (UAAF) (3), die dafür ausgelegt ist,
Zugangsauthentifizierung für ein CNG (1) durchzuführen, einen Verwaltungsberechtigungsnachweis zwischen dem CNG und einer CNGCF (6) zu erzeugen und den Verwaltungsberechtigungsnachweis zu senden;
das CNG (1), das dafür ausgelegt ist, den Verwaltungsberechtigungsnachweis zu erhalten und die CNGCF gemäß dem Verwaltungsberechtigungsnachweis zu authentifizieren; und
die CNGCF (6), die dafür ausgelegt ist, den Verwaltungsberechtigungsnachweis zu erhalten und das CNG gemäß dem Verwaltungsberechtigungsnachweis zu authentifizieren.

12. System zur Verwaltungsauthentifizierung auf der Basis des NASS nach Anspruch 11, ferner umfassend:
eine Access Management Function (AMF) (2), die dafür ausgelegt ist, Informationen zwischen dem CNG und der UAAF weiterzuleiten.

13. System zur Verwaltungsauthentifizierung auf der Basis des NASS nach Anspruch 11 oder Anspruch 12, ferner umfassend:
eine Network Access Configuration Function (NACF) (5), die dafür ausgelegt ist,
eine Zugangsnetzkennung an das CNG zu vergeben und die Zugangsnetzkennung zu der UAAF zu senden; und
eine Connectivity Session Location and Repository Function (CLF) (4), die dafür ausgelegt ist, die Zugangsnetzkennung zu der UAAF weiterzuleiten, wobei die Zugangsnetzkennung durch die NACF an das CNG vergeben wird.

## Revendications

1. Procédé de gestion d'authentification d'une Passerelle de Réseau Client, CNG, et d'une Fonction de Configuration de Passerelle de Réseau Client, CNGCF, dans un Sous-Système d'Attachement de Réseau, NASS, **caractérisé par** :
l'exécution (501), par une Fonction d'Autorisation d'Accès Utilisateur, UAAF, d'une authentification d'accès d'une CNG ;
la génération (502), par l'UAAF, d'une certification de gestion entre la CNG et une CNGCF ;
l'envoi, par l'UAAF, de la certification de gestion générée à la CNGCF ; et l'obtention par la CNG de la certification de gestion ; et
l'authentification (504), par la CNG, de la CNGCF en fonction de la certification de gestion obtenue ; et l'authentification, par la CNGCF, de la CNG en fonction de la certification de gestion.

2. Procédé d'authentification de gestion basé sur un NASS de la revendication 1, dans lequel l'obtention par la CNG de la certification de gestion comprend :
l'envoi, par l'UAAF, de la certification de gestion générée à la CNG ; et
l'authentification, par la CNG, de la CNGCF en fonction de la certification de gestion obtenue.

3. Procédé d'authentification de gestion basé sur un NASS de la revendication 1 ou la revendication 2, dans lequel :
la CNG authentifie la CNGCF en fonction de la certification de gestion obtenue ; et
l'étape d'authentification par la CNGCF de la CNG en fonction de la certification de gestion comprend :
l'utilisation, par la CNG et la CNGCF, de la certification de gestion mémorisée afin d'effectuer une authentification de gestion dans une interaction bidirectionnelle.

4. Procédé d'authentification de gestion basé sur un NASS de la revendication 1, la revendication 2 ou la revendication 3, dans lequel la génération, par l'UAAF, de la certification de gestion entre la CNG et la CNGCF comprend :
à la connexion initiale d'un utilisateur, le jugement par l'UAAF s'il convient ou non de générer la certification de gestion entre la CNG et la CNGCF en fonction d'une consigne locale ; et dans l'affirmative, la génération par l'UAAF de la certification de gestion entre la CNG et la CNGCF en utilisant des informations de clé d'authentification d'accès d'origine de l'utilisateur ou une clé racine configurée par un opérateur.

5. Procédé d'authentification de gestion basé sur un NASS selon l'une quelconque des revendications 1 à 4, comprenant en outre :
l'établissement, par une Fonction de Localisation et d'Entreposage de Session de Connectivité (CLF) ou l'UAAF, d'une corrélation entre la CNG et la CNGCF correspondante en fonction des informations de position de CNG incluses dans des informations d'authentification quand l'UAAF exécute une authentification d'accès de la CNG.

6. Procédé d'authentification de gestion basé sur un NASS selon l'une quelconque des revendications 1 à 4, comprenant en outre :
par la CLF ou l'UAAF, l'établissement d'une corrélation entre la CNG et la CNGCF correspondante en fonction d'un identifiant de réseau d'accès attribué par une Fonction de Configuration d'Accès de Réseau, (NACF) à la CNG quand l'UAAF exécute une authentification d'accès de la CNG ; ou
l'établissement de la corrélation entre la CNG et la CNGCF correspondante en fonction de l'identifiant de réseau d'accès attribué par la NACF à la CNG et transmis par la CLF.

7. Procédé d'authentification de gestion basé sur un NASS selon la revendication 5, dans lequel l'envoi par l'UAAF, de la certification de gestion générée à la CNGCF comprend :
par l'UAAF, la recherche de la CNGCF correspondant à la CNG par le biais de la CLF en fonction des informations de position de CNG et de la corrélation entre la CNG et la CNGCF correspondante, et l'envoi de la certification de gestion générée à la CNGCF.

8. Procédé d'authentification de gestion basé sur un NASS selon la revendication 6, dans lequel l'envoi par l'UAAF, de la certification de gestion générée à la CNGCF comprend :
par la CLF, la recherche de la CNGCF correspondant à la CNG en fonction de l'identifiant de réseau d'accès et de la corrélation entre la CNG et la CNGCF correspondante, et l'envoi de la certification de gestion générée à la CNGCF.

9. Procédé d'authentification de gestion basé sur un NASS selon la revendication 2, dans lequel l'envoi par l'UAAF, de la certification de gestion générée à la CNG comprend :
par l'UAAF, l'envoi de la certification de gestion générée à la CNG par le biais d'une Fonction de Gestion d'Accès (AMF).

10. Procédé d'authentification de gestion basé sur un NASS selon l'une quelconque des revendications 1 à 9, dans lequel :
la certification de gestion est une association de sécurité et comprend : un protocole de sécurité, un algorithme à clé, une clé utilisée dans l'algorithme à clé, un vecteur initial et un cycle de vie.

11. Système de gestion d'authentification d'une Passerelle de Réseau Client, CNG, et d'une Fonction de Configuration de Passerelle de Réseau Client, CNGCF, dans un Sous-Système d'Attachement de Réseau, NASS, **caractérisé par** :
une Fonction d'Autorisation d'Accès Utilisateur (UAAF) (3), configurée pour exécuter une authentification d'accès d'une CNG (1), générer une certification de gestion entre la CNG et une CNGCF (6), et envoyer la certification de gestion ;
la CNG (1) étant configurée pour obtenir la certification de gestion et authentifier la CNGCF en fonction de la certification de gestion ; et
la CNGCF (6) étant configurée pour obtenir la certification de gestion et authentifier la CNG en fonction de la certification de gestion.

12. Système d'authentification de gestion basé sur un NASS selon la revendication 11, comprenant en outre :
une Fonction de Gestion d'Accès (AMF) (2), configurée pour transmettre des informations entre la CNG et l'UAAF.

13. Système d'authentification de gestion basé sur un NASS selon la revendication 11 ou la revendication 12, comprenant en outre :
une Fonction de Configuration d'Accès de Réseau (NACF) (5), configurée pour attribuer un identifiant de réseau d'accès à la CNG et envoyer l'identifiant de réseau d'accès à l'UAAF ; et
une Fonction de Localisation et d'Entreposage de Session de Connectivité (CLF) (4),
configurée pour transmettre l'identifiant de réseau d'accès à l'UAAF, l'identifiant de réseau d'accès étant attribué par la NACF à la CNG.
